Europäisches Patentamt

European Patent Office

Office européen des brevets

(11) Veröffentlichungsnummer: **0 327 013**
**A1**

## EUROPÄISCHE PATENTANMELDUNG

(21) Anmeldenummer: 89101616.4

(22) Anmeldetag: 31.01.89

(51) Int. Cl.4 **C09J 5/06 , C09J 3/16 ,**
**C08G 12/42**

(30) Priorität: 05.02.88 DE 3803384

(43) Veröffentlichungstag der Anmeldung:
**09.08.89 Patentblatt 89/32**

(84) Benannte Vertragsstaaten:
**AT BE CH DE ES FR GB IT LI SE**

(71) Anmelder: **HOECHST AKTIENGESELLSCHAFT**
**Postfach 80 03 20**
**D-6230 Frankfurt am Main 80(DE)**

(72) Erfinder: **Lietz, Gerhard**
**Saarstrasse 8**
**D-3300 Braunschweig(DE)**
Erfinder: **Nicolaus, Othmar**
**Am Buchwald 3**
**D-6233 Kelkheim (Taunus)(DE)**
Erfinder: **Seidel, Manfred**
**Völklinger Weg 68**
**D-6000 Frankfurt am Main(DE)**
Erfinder: **Spieler, Wolfgang**
**Weissdornweg 8**
**D-6238 Hofheim am Taunus(DE)**
Erfinder: **Stüben, Wolfgang**
**Südring 14b**
**D-6234 Hattersheim am Main(DE)**

(54) **Verfahren zum thermostabilen Verkleben von verformbaren Flächengebilden.**

(57) Verfahren zum thermostabilen Verkleben von verformbaren Flächengebilden, vorzugsweise von textilen Flächengebilden, wobei man auf die Oberfläche eines verformbren Flächengebildes eine Lösung eines mit Alkanolen verätherten Methylolaminotriazins mit einem analytischen Mittelwert von 0,3 n bis 2 n Methylolgruppen pro Mol des entsprechenden Aminotriazins, die ganz oder teilweise veräthert sind, wobei n die Zahl der Aminogruppen des Aminotriazins ist, gegebenenfalls zusammen mit einem Katalysator, aufträgt, das so behandelte Flächengebilde trocknet und anschließend unter Druck und Wärmeeinwirkung mit einem zweiten Flächengebilde verpreßt.

## Verfahren zum thermostabilen Verkleben von verformbaren Flächengebilden

Die vorliegende Erfindung betrifft ein Verfahren zum thermostabilen Verkleben von verformbaren Flächengebilden, wobei man veretherte Methylolaminotriazine, gegebenenfalls in Gegenwart geeigneter Katalysatoren, auf die Oberfläche solcher verformbarer Flächengebilde, vorzugsweise auf textile Flächengebilde, aufbringt und die so behandelten Materialien bei erhöhten Temperaturen und erhöhtem Druck miteinander oder mit anderen Flächengebilden verpreßt und gegebenenfalls verformt.

Zum Verkleben textiler Flächengebilde finden heute Polymere, wie Polyethylene, Polyamide, Polyester und entsprechend modifizierte Polymere als Dispersionen, Lösungen oder Pulver Verwendung. Die Thermostabilität dieser Verklebungen ist aber begrenzt, so daß bei Einwirkung erhöhter Temperaturen, z.B. 120°C, keine ausreichende Haftfestigkeit zwischen den verklebten Materialien mehr gegeben ist.

Es wurde nun gefunden, daß bei Verwendung veretherter Methylolaminotriazine zum Verkleben von Flächengebilden thermostabile Verfestigungen erhalten werden, die nicht nur bei Raumtemperatur, sondern auch bei erhöhten Temperaturen, z.B. 120°C, noch gute Haftfestigkeiten zwischen den verklebten Materialien aufweisen.

Gegenstand der Erfindung ist somit ein Verfahren zum thermostabilen Verkleben von verformbaren Flächengebilden, bei dem man auf die Oberfläche eines verformbaren Flächengebildes eine Lösung eines mit Alkanolen verätherten Methylolaminotriazins mit einem analytischen Mittelwert von 0,3 n bis 2 n, vorzugsweise 0,5 bis 1,2 n, Methylolgruppen pro Mol des entsprechenden Aminotriazins, die ganz oder teilweise veräthert sind, wobei n die Zahl der Aminogruppen des Aminotriazins ist, gegebenenfalls in Gegenwart geeigneter Katalysatoren, aufträgt, das so behandelte Flächengebilde trocknet und anschließend unter Druck und Wärmeeinwirkung mit einem zweiten Flächengebilde verpreßt.

Die im Rahmen der vorliegenden Erfindung benutzten verätherten Methylol-Aminotriazine können z.B. hergestellt werden, indem das jeweilige Aminotriazin, bevorzugt Melamin, aber auch Benzoguanamin, mit 0,3 bis 3 n Mol Formaldehyd, 2 n bis 10 n Mol eines Alkanols oder eines Gemisches von Alkanolen mit 1 bis 8 Kohlenstoffatomen, deren Kohlenstoffkette, sofern sie mehr als 2 Kohlenstoffatome hat, auch durch ein Sauerstoffatom unterbrochen sein kann, und 0 bis 5 n Mol Wasser pro Mol des Aminotriazins in Gegenwart einer anorganischen oder organischen Säure bei einem pH-Wert zwischen 3 und 6,5 0,2 bis 20 Minuten lang unter erhöhtem Druck auf 80 bis 130°C erwärmt wird.

Vorzugsweise werden pro Mol des Aminotriazins 0,5 n - 2 n Mol Formaldehyd und 2,5 n - 7 n Mol des Alkanols oder Alkanolgemisches verwendet. Zur Einstellung bestimmter Kondensationsgrade wird die zugesetzte Wassermenge vorzugsweise im Bereich von 0 bis 3 n Mol pro Mol des Aminotriazins variiert. Zur Herstellung besonders niedrig kondensierter Produkte wird vorzugsweise wasserfrei gearbeitet.

Beispiele für Alkanole, die sich für die Herstellung der erfindungsgemäß zu verwendenden Produkte eignen, sind: Methanol, Äthanol, Propanol, n-Butanol, 2-Butanol, 1-Pentanol, 2-Pentanol, 3-Pentanol, Methylbutanole, Hexanole, Isohexanole, Methylhexanole und Äthylhexanole.

Alkanole, deren Kohlenstoffkette durch ein Sauerstoffatom unterbrochen ist, sind z.B.: Methoxyäthanol, Äthoxyäthanol, Propoxyäthanol, Methoxypropanol, Methoxyisopropanol, Äthoxypropanol, Methoxy- bzw. Äthoxybutanol, Methoxy- bzw. Äthoxyisobutanol.

Bevorzugt sind solche Alkanole, die 1 bis 4 Kohlenstoffatome aufweisen, und deren Kohlenstoffkette, falls sie mehr als 2 Kohlenstoffatome hat, ebenfalls durch ein Sauerstoffatom unterbrochen sein kann.

Die Verwendung von Alkanolgemischen führt zur Bildung gemischt verätherter Methylol-melaminen und -benzoguanaminen.

Besonders bevorzugt ist die Verwendung von Methanol als Alkanol oder eines mindestens 40 Mol-% Methanol enthaltenden Alkanolgemisches.

Der zur Ausführung des Verfahrens bevorzugte Temperaturbereich liegt zwischen 85 und 115°C. Da die Siedetemperatur des Reaktionsgemisches bei Normaldruck im allgemeinen unter 90°C liegt, wird in einer druckfest verschlossenen Apparatur gearbeitet. Für den Fall, daß bei Verwendung höherer Alkanole die Siedetemperatur des Reaktionsgemisches bei Normaldruck oberhalb 80, vorzugsweise oberhalb 90°C liegt, wird die Temperatur so weit gesteigert, daß in der Apparatur mindestens ein Überdruck von 0,1 bar entsteht. Das Verfahren wird vorzugsweise bei einem pH-Wert zwischen 4,5 und 6,5 ausgeführt. Dieser pH-Wert wird durch Zusatz einer starken anorganischen oder organischen Säure in Mengen von etwa 0,1 bis 1 pro Mille zum Reaktionsansatz erzielt. Säuren, die für das Verfahren eingesetzt werden können, sind anorganische Säuren, wie z.B. Schwefelsäure, Salpetersäure, Brom-, Chlor-, Fluor- oder Jodwasserstoffsäure, sowie Verbindungen, aus denen diese unter den beanspruchten Reaktionsbedingungen freigesetzt werden, oder organische Säuren vergleichbarer Säurestärke, wie z.B. Sulfonsäuren, Ameisensäure oder Halogenessigsäuren.

Prinzipiell besteht auch die Möglichkeit, den notwendigen pH-Wert durch Zusatz schwächerer Säuren einzustellen. Jedoch ist es vorteilhaft, mit stärkeren Säuren zu arbeiten, da man davon geringere molare Mengen benötigt und dann das nach der Neutralisation in sehr geringer Menge anfallende Salz im allgemeinen im Produkt verbleiben kann, ohne bei der Anwendung oder im ausgehärteten Film zu stören.

Gegebenenfalls kann man auch in Gegenwart inerter organischer Lösungsmittel arbeiten. Als inerte organische Lösungsmittel sind beispielsweise geeignet: Niedere Aromaten, aliphatische Äther, subst. Amide wie Dimethylformamid, tert. Alkohole wie tert. Butanol.

Die Herstellung dieser als Beispiel gedachten veretherten Methylol-Aminotriazine und deren Verwendung ist im einzelnen in der DE-25 16 349 beschrieben.

Zur Durchführung des erfindungsgemäßen Verfahrens werden Lösungen der veretherten Methylol-Aminotriazine in Wasser oder einem anderen geeigneten Lösemittel, wie etwa niedere Alkohole, auf das verformbare Flächengebilde aufgetragen. Der Gehalt an veretherten Methylol-Aminotriazinen in dem Lösemittel beträgt ungefähr 200 bis 800 g pro kg Lösemittel. Als Katalysatoren für die Vernetzungsreaktion enthalten diese Lösungen gegebenenfalls außerdem noch anorganische oder organische Säurespender, wie Zinkchlorid, Ammonchlorid, Diammonsulfat, Diammonhydrogenphosphat, Magnesiumchlorid und Salze ausgewählter Amine. Bewährt hat sich 2-Amino-2methyl-1-propanol Hydrochlorid als Katalysator. Die Mengen an Katalysator betragen 0,1 % bis 20 %, vorzugsweise 0,3 bis 10 Gew.-%, bezogen auf die Menge an veräthertem Methylolaminotriazin.

Die veretherten Methylolaminotriazine werden, gegebenenfalls zusammen mit den Katalysatoren, auf das verformbare Flächengebilde durch Sprühen, Pflatschen, Rakeln, Schäumen oder Drucken aufgetragen, wobei die Auflage der veretherten Methylolaminotriazine 1 bis 250 g/m², bevorzugt 10 bis 100 g/m², beträgt.

Verschiedentlich ist beim Auftragen der veräetherten Methylolaminotriazine die Mitverwendung handelsüblicher Verdicker erforderlich. Bewährt haben sich dafür wasserlösliche Stärke- oder Zelluloseether, wie z.B. deren Methyl-, Hydroxylethyl- oder Natriumcarboxymethyl-Verbindungen. Die Anwendungsmengen sind abhängig vom Verdickungsgrad und können 1 bis 25 g, vorzugsweise 5 bis 15 g betragen, bezogen auf die auf das Material aufzutragende Menge an Lösung.

Für den Fall, daß der Auftrag durch Schäumen erfolgt, ist der Einsatz entsprechender handelsüblicher Schaummittel, wie Alkylbenzolsulfonate oder Nonylphenoloxethylate, erforderlich.

Als verformbare Flächengebilde kommen vorzugsweise Textilmaterialien auf der Basis natürlicher und/oder synthetischer Fasermaterialien, wie Baumwolle, Wolle, Zellwolle, Rayon, Polyester, Polyamid, Aramid, Carbonfasern, Steinwolle, Glasfasern sowie Mischungen der genannten Faserstoffe untereinander, in Frage. Bevorzugt werden Flächengebilde, die sich durch eine hohe Elastizität auszeichnen, wie Maschenware oder Vliesstoffe. Aber auch Webwaren sind geeignet, wenn an die Verformbarkeit der Flächengebilde keine besonderen Anforderungen gestellt werden.

Als vorteilhaft hat es sich erwiesen, zur Griffgebung bzw. zur Erzielung spezifischer Ausrüstungseffekte eine Vorbehandlung der Flächengebilde mit handelsüblichen Veredlungsprodukten, wie Fluorcarbonharze, ausgewählte Polymer-Dispersionen und/oder Vernetzer, z.B. veretherte oder nicht veretherte N-Methylol-Verbindungen des Harnstoffs, Melamins oder Glyoxalharnstoffs - zusammen mit geeigneten Katalysatoren- vorzunehmen.

Nach dem Auftrag der veretherten Methylolaminotriazine, gegebenenfalls zusammen mit Katalysatoren, auf die verformbare Flächengebilde wird bei 80 bis 150° C, vorzugsweise bei 100 bis 120° C, getrocknet, wobei eine Übertrocknung vermieden werden muß.

Das auf der Oberfläche mit den veretherten Methylolaminotriazinen und gegebenenfalls Katalysatoren beschichtete Material kann nun gegen gleichartig oder andersartig behandelte oder gegen unbehandelte flächenartige Gebilde bei Temperaturen zwischen 130 und 200° C, vorzugsweise bei 150 bis 170° C, mit Drücken von 5 bis 200 Kp/cm², vorzugsweise 20 bis 100 Kp/cm², innerhalb 30 Sek. bis 10 Min., insbesondere zwischen 2 bis 5 Min., auf Flach-oder Formpressen verklebt werden.

Die Flächengebilde dieser zweiten Schicht, gegen die das erfindungsgemäß vorbehandelte Material verpreßt wird, können unbehandelt sein oder ihrerseits auch eine spezifische Behandlung, beispielsweise mit Polymerdispersionen oder härtbaren Phenol-, Harnstoff-oder Melaminharzen, erfahren haben. Ferner kann das Material zur Griffgestaltung oder zur Erzielung spezifischer Ausrüstungseffekte, wie bereits oben beschrieben, behandelt sein.

Als Flächengebilde für die zweite Schicht, gegen die das mit dem veretherten Methylolaminotriazin behandelte Material verklebt wird, kommen ebenfalls natürliche und/oder synthetische Faserstoffe - wie zuvor schon beschrieben - in Betracht. Aber auch nichttextile, verformbare Flächengebilde, wie weichelastische Schaumstoffe, z.B. auf Melaminharz-Basis, sind geeignet.

Für die zweite Schicht können von besonderem Interesse Faserstoffe sein, die z.B. zum überwiegenden Teil aus Zellulosefaserstoffen bestehen, zu einem vliesartigen Flächengebilde gelegt, mechanisch vorverfestigt und ebenfalls mit veretherten Methylolaminotriazinen und Katalysatoren imprägniert sind. Auch Schaumstoffe auf Melaminharz-Basis können eine ähnliche Vorbehandlung mit veretherten Methylolaminotriazinen und Katalysatoren, gegebenenfalls zusammen mit handelsüblichen Oleo-Hydrophobierunsmitteln, erfahren. Das erfindungsgemäß vorbehandelte Flächengebilde der ersten Schicht wird dann gleichzeitig mit den so vorbehandelten Flächengebilden der zweiten Schicht verfestigt, verformt und gegeneinander verklebt.

Die nach dem erfindungsgemäßen Verfahren erhaltenen Flächengebilde können im Automobilbau bei der Ausstattung des Fahrgastraums oder bei der Verkleidung als Schall-und/oder Wärmeisolierung im Karosserie- und Motorbereich Verwendung finden. Die in diesen Bereichen verschiedentlich auftretenden thermischen Belastungen erfordern entsprechende thermostabile Materialien.

Die nachstehenden Beispiele sollen das erfindungsgemäße Verfahren erläutern.

**Beispiel 1**

Ein mechanisch vorverfestigtes Polyesterfaser-Vlies, 80 g/m², wird mit nachstehender Formulierung auf einem Foulard imprägniert und anschließend bei 120° C getrocknet und 30 Sek. bei 150° C kondensiert.

15 g/l einer perfluoralkylgruppenhaltigen, wäßrig/isopropanolhaltigen, anionisch dispergierten Polymerdispersion mit einem Gehalt an Fluor von 17,6 %

3 g/l Zinknitrat-6-Hydrat

3 g/l Hexamethylol-hexamethyl-melaminäther, 50 %ig Flottenaufnahme 80 %

Das so vorbehandelte Fasermaterial wird mit nachstehender Formulierung mit Hilfe einer Rakel beschichtet.

500 g/kg eines Melaminharzes, 75 %ig, nachstehender Zusammensetzung:

2,1 Mol Formaldehyd und 1,6 Mol Methoxyl pro Mol Melamin

490 g/kg einer 3%igen Lösung eines Methyl-hydroxyethylcelluloseethers mit einer mittleren Viskosität der 2 %igen Lösung von 4000 cP nach Höppler

10 g/kg 2-Amino-2-methyl-1-propanol Hydrochlorid, 35%ig

Der Auftrag der Beschichtungsformulierung, bezogen auf 100 % Feststoff, beträgt nach der Trocknung bei 100° C 50 g/m².

Zwei auf diese Weise vorbehandelte und beschichtete Fasermaterialien werden mit den beschichteten Seiten gegeneinander auf einer Flachpresse bei 150° C, 3 Min. 50 Kp/cm², verpreßt.

Beide Flächengebilde sind nach dem Verpressen fest miteinander verbunden. Die Haftfestigkeit (14,5 N) ist exakt nicht bestimmbar, da sie höher liegt als die Reißfestigkeit des Fasermaterials.

**Beispiel 2**

Das wie in Beispiel 1 mit den beiden dort beschriebenen Formulierungen vorbehandelte Fasermaterial wird gegen ein nicht vorbehandeltes Polyester-Vlies, ebenfalls 80 g/m², auf einer Flachpresse bei 150° C, 3 Min., 50 Kp/cm², verpreßt.

Beide Flächengebilde sind nach dem Verpressen fest miteinander verbunden. Die Haftfestigkeit beträgt 21,1 N.

Die Haftfestigkeit wurde auf einem Reißfestigkeitsprüfgerät der Firma Zwick ermittelt. Die Einspannlänge beträgt 50 mm, die Abzugsgeschwindigkeit 100 mm/min.

**Beispiel 3**

Ein wie in Beispiel 1 mit den beiden dort beschriebenen Formulierungen vorbehandeltes und beschichtetes Polyesterfaser-Vlies wird mit seiner beschichteten Seite gegen ein anderes Fasermaterial, das seinerseits ebenfalls vorbehandelt ist, auf einer Formpresse verpreßt.

Bei dem Fasermaterial, gegen welches das vorbehandelte und beschichtete Polyesterfaser-Vlies verpreßt wird, handelt es sich um ein vorwiegend aus Cellulosefaserstoffen bestehendes, leicht vorverfestigtes Vlies mit einem Quadratmetergewicht von 1200 g.

Das letztgenannte Fasermaterial wird in einem gesonderten Arbeitsgang mit nachstehender Formulierung imprägniert.

600 g/kg eines Melaminharzes, 75 %ig, nachstehender Zusammensetzung:

2,1 Mol Formaldehyd und 1,5 Mol Methoxyl pro Mol Melamin

1 g/kg Alkylpolyglykolether und 8 Mol Ethylenoxid

12 g/kg 2-Amino-2-methyl-1-propanol Hydrochlorid, 35%ig

387 g/kg Wasser

Der Auftrag erfolgt durch Tauchen und Abquetschen der überschüssigen Ausrüstungsflotte und ist so bemessen, daß 50 %, bezogen auf das Fasermaterial, an Melaminharz 100 %ig, aufgetragen wird. Die Trocknung des imprägnierten Fasermaterials erfolgt bei 120 bis 130° C auf eine Restfeuchte von ca. 2 %.

Das Formpressen der Fasermaterialien wird bei 150° C, 3 Min., bei einem Druck von 50 Kp/cm² durchgeführt.

Beide Fasermaterialien sind nach dem Verpressen miteinander fest verbunden und entsprechend verformt.

**Beispiel 4**

Ein wie in Beispiel 1 mit den beiden dort beschriebenen Formulierungen vorbehandelte Polyestervlies wird mit seiner beschichteten Seite gegen ein weiteres Flächengebilde mit 900 g/m², das vorwiegend aus Cellulosefasermaterial besteht und mit härtbaren Phenolharzen, Trockenauflage 25 %, bezogen auf das Fasergewicht, vorbehandelt ist, auf einer Formpresse bei 180°C, 5 Min. bei 75 Kp/cm² verpreßt.

Beide Flächengebilde sind fest miteinander verbunden und verformt.

**Beispiel 5**

Ein mechanisch vorverfestigtes Polyesterfaser-Vlies, 100 g/m², wird mit nachstehender Formulierung auf einem Foulard imprägniert und anschließend bei 130°C getrocknet und 1 Min. bei 150°C kondensiert.

15 g/l einer perfluoralkylgruppenhaltigen, wäßrigen, kationisch dispergierten Polymerdispersion mit 17,5 % F

3 g/l Zinknitrat-6-Hydrat

3 g/l Hexamethyl-hexamethylol-melaminether, 50 %ig

Flottenaufnahme 90 %

Das wie oben beschriebene Fasermaterial wird anschließend mit nachstehender Formulierung geplatscht.

500 g/kg eines Melaminharzes, 75 %ig, nachstehender Zusammensetzung:

2,5 Mol Formaldehyd und 1,9 Mol Methoxyl pro Mol Melamin

490 g/kg einer 2%igen Lösung eines Methyl-hydroxyethylcelluloseethers mit einer mittleren Viskosität von 4000 cP nach Höppler

10 g/kg 2-Amino-2-methyl-1-propanol Hydrochlorid, 35%ig

Der Auftrag, bezogen auf 100 % Feststoff, beträgt nach der Trocknung bei 110°C 55 g/m².

Das wie oben beschrieben vorbehandelte und beschichtete Fasermaterial wird dann wie in Beispiel 3 oder 4 weiterverarbeitet.

**Beispiel 6**

Es wird wie in Beispiel 1 beschrieben verfahren, jedoch wird anstelle des Methyl-hydroxyethylcelluloseethers als Verdicker eine Natrium-Carboxymethyl-cellulose verwendet. Die Formulierung für die Beschichtungsmasse hat dann nachstehende Zusammensetzung.

500 g/kg eines Melaminharzes, 75 %ig, nachstehender Zusammensetzung:

2,1 Mol Formaldehyd und 1,6 Mol Methoxyl pro Mol Melamin

490 g/kg einer 3%igen Lösung einer Natrium-Carboxymethylcellulose mit einer mittleren Viskosität der 2%igen Lösung von 6000 cP nach Höppler

10 g/kg 2-Amino-2-methyl-1-propanol Hydrochlorid, 35%ig

**Beispiel 7**

Es wird wie in Beispiel 3 verfahren, jedoch kommt ein Melaminharz, 100%ig, nachstehender, Zuammensetzung

1,7 Mol Formaldehyd und 1 Mol Methoxyl pro Mol Melamin

zum Einsatz, das im heißen Wasser zuvor gelöst wurde. Die Formulierung hat dann folgende Zusammensetzung:

450 g/kg Melaminharz 100 %, wie oben beschrieben

538 g/kg Wasser

12 g/kg 2-Amino-2-methyl-1-propanol Hydrochlorid, 35%ig

**Beispiel 8**

Ein Aramidfaser-Vlies, 100 g/m², wird wie in Beispiel 1 mit den beiden dort beschriebenen Formulierungen behandelt und mit seiner beschichteten Seite gegen ein anderes Fasermaterial, das seinerseits ebenfalls vorbehandelt ist, auf einer Formpresse verpreßt.

Bei dem Fasermaterial, gegen welches das vorbehandelte und beschichtete Aramidfaser-Vlies verpreßt wird, handelt es sich um ein Basaltsteinwolle-Vlies mit 850 g/m², welches mit nachstehender Formulierung imprägniert wurde.

150 g/kg eines Melaminharzes, 75%ig, nachstehender Zusammensetzung:

2,1 Mol Formaldehyd und 1,6 Mol Methoxyl pro Mol Melamin, dessen Löslichkeit in Wasser nicht mehr unbegrenzt ist

3 g/kg 2-Amino-2-methyl-1-propanol Hydrochlorid, 35%ig

847 g/kg Wasser

Der Auftrag erfolgte über Sprühen und Absaugen der überschüssigen Flotte. Die Trockenauflage an Melaminharz beträgt 15 %, bezogen auf das Fasermaterial. Die Trocknung des imprägnierten Fasermaterials wurde bei 110°C vorgenommen, wobei eine Übertrocknung des Materials vermieden wurde.

Das Verpressen der Fasermaterialien erfolgt bei 150°C, 2 1/2 Min., auf eine durchschnittliche Schichtdicke von 4 mm, bei einem Druck von 50 Kp/cm² auf einer Flachpresse.

Beide Fasermaterialien sind nach dem Verpressen miteinander verbunden. Die Haftfestigkeit liegt höher als die Festigkeit des verfestigten Basaltsteinwolle-Materials.

## Beispiel 9

Es wird wie in Beispiel 8 verfahren, jedoch wird für die Verfestigung der Basaltsteinwolle ein härtbares Phenolharz, Trockenauflage 7,5 %, verwendet. Die Preßtemperatur beträgt 190°C.

## Beispiel 10

Ein wie in Beispiel 1 mit den beiden dort beschriebenen Formulierungen vorbehandeltes und beschichtetes Faservlies wird mit seiner beschichteten Seite gegen ein mechanisch vorverfestigtes Polyester-Vlies, 300 g/m², das seinerseits vorbehandelt ist, verpreßt.

Das Polyesterfaservlies wird mit nachstehender Formulierung auf einem Foulard imprägniert.
400 g/kg eines Melaminharzes 75%ig, nachstehender Zusammensetzung:
2,5 Mol Formaldehyd und 1,9 Mol Methoxyl pro Mol Melamin
8 g/kg 2-Amino-2-methyl-1-propanol Hydrochlorid, 35%ig
592 g/kg Wasser

Die Trockenauflage des Melaminharzes beträgt nach der Trocknung bei 110°C 50 %, bezogen auf das Fasermaterial.

Die Verpressung wurde auf einer Flachpresse bei 150°C, 100 Kp/cm² Druck, 3 Min. auf 2 mm Schichtdicke durchgeführt.

Die beiden Flächengebilde waren fest miteinander verbunden.

## Beispiel 11

Ein Carbonfaservlies, 120 g/m², wird, wie in Beispiel 1 beschrieben, vorbehandelt und wird dann mit nachstehender Formulierung im Punktdruck-Verfahren beschichtet.
600 g/kg eines Melaminharzes, das 66 % nachstehender Verbindung:
2,2 Mol Formaldehyd und 1,2 Mol Methoxyl pro Mol Melamin
und 9 % Triglykol enthält.

400 g/kg einer 4,5 %igen Lösung eines Methylhydroxyethyl-celluloseethers mit einer mittleren Viskosität der 2 %igen Lösung von 4000 cP nach Höppler

Der Auftrag der Beschichtungsformulierung, bezogen auf 100 % Feststoff, beträgt nach der Trocknung bei 110°C 45 g/m².

Bei dem Flächengebilde, gegen welches das vorbehandelte und beschichtete Carbonfaservlies verpreßt wird, handelt es sich um einen weichelastischen Schaumstoff auf Melaminharz-Basis, ca. 185 g/m², 15 mm dick, der mit nachstehender Formulierung imprägniert wurde.
150 g/kg eines Melaminharzes, das 66 % nachstehender Verbindung:
2,2 Mol Formaldehyd und 1,6 Mol Methoxyl pro Mol Melamin
und 9 % Triglykol enthält.
4 g/l 2-Amino-2-methyl-1-propanolhydrochlorid, 35 %ig
10 g/l einer perfluoralkylgruppenhaltigen wäßrig/isopropanolhaltigen, anionisch dispergierten Polymerdispersion mit einem Gehalt an Fluor von 17,6 %
836 g/Kg Wasser

Der Auftrag erfolgte über Tauchen und Abquetschen der überschüssigen Flotte. Die Naßauflage beträgt 400 %, bezogen auf den Schaumstoff. Die Trocknung des imprägnierten Schaumstoffes wurde bei 110°C vorgenommen, wobei eine Übertrocknung des Materials vermieden wurde.

Das Verpressen des vorbehandelten und beschichteten Carbonfaservlieses gegen den vorimprägnierten Schaumstoff erfolgt auf einer Flachpresse bei 160°C, 3 min, auf eine durchschnittliche Schichtdicke von 5 mm bei einem Druck von 25 kp/cm².

Beide Flächengebilde sind nach dem Verpressen fest miteinander verbunden und der Schaumstoff auf 5 mm verdichtet.

## Ansprüche

1. Verfahren zum thermostabilen Verkleben von verformbaren Flächengebilden, dadurch gekennzeichnet, daß man auf die Oberfläche eines verformbaren Flächengebildes eine Lösung eines mit Alkanolen veretherten Methylolaminotriazins mit einem analytischen Mittelwert von 0,3 n bis 2 n Methylolgruppen pro Mol des entsprechenden Aminotriazins, die ganz oder teilweise veräthert sind, wobei n die Zahl der Aminogruppen des Aminotriazins ist, und gegebenenfalls einen Katalysator aufträgt, das so behandelte Flächengebilde trocknet und anschließend unter Druck und Wärmeeinwirkung mit einem zweiten Flächengebilde verpreßt.

2. Verfahren nach Anspruch 1, dadurch gekennzeichnet, daß man solche mit Alkanolen veretherte Methylolaminotriazine nimmt, die durch Umsetzung des Aminotriazins mit 0,3 bis 3 n Mol Formaldehyd, 2 n bis 10 n Mol eines Alkanols oder eines Gemisches von Alkanolen mit 1 bis 8 C-Atomen, deren C-Kette, sofern sie mehr als 2 C-Atome hat, auch durch ein Sauerstoffatom unterbrochen sein kann, und 0 bis 5 n Mol Wasser pro Mol des Aminotriazins in Gegenwart einer Säure bei pH 3 bis 6,5 0,5 bis 20 Minuten lang unter erhöhtem Druck auf 80 bis 130 °C erhalten werden.

3. Verfahren nach Anspruch 1, dadurch gekennzeichnet, daß man auf das Flächengebilde 1 bis 250 g/m² des mit Alkanolen veretherten Methylolaminotriazins aufträgt.

4. Verfahren nach Anspruch 1, dadurch gekennzeichnet, daß man nach dem Auftrag des mit Alkanolen veretherten Methylolaminotriazins das Flächengebilde bei 80 bis 150 °C trocknet und anschließend bei 130 bis 200 °C unter Druck verklebt.

5. Verfahren nach Anspruch 1, dadurch gekennzeichnet, daß man als verformbares Flächengebilde ein textiles Flächengebilde nimmt.

6. Flächengebilde erhalten nach dem Verfahren gemäß Anspruch 1.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 336 446 (CASSELLA FARBWERKE) <br> * Ansprüche * <br> --- | 1,5,6 | C 09 J 5/06 <br> C 09 J 3/16 <br> C 08 G 12/42 |
| A | PATENT ABSTRACTS OF JAPAN, Band 1, Nr. 12, 22. März 1977, Seite 555 C 76; & JP-A-51 125 137 (PENTERU K.K.) 11-01-1976 <br> * Insgesamt * <br> --- | | |
| A | FR-A-2 001 212 (POLYMARK) <br> * Ansprüche 1,5,11 * <br> --- | | |
| A,D | FR-A-2 307 806 (CASSELLA FARBWERKE) & DE-A-2 516 349 <br> ----- | | |

**RECHERCHIERTE SACHGEBIETE (Int. Cl.4)**

C 09 J
C 08 G

Der vorliegende Recherchenbericht wurde für alle Patentansprüche erstellt

| Recherchenort | Abschlußdatum der Recherche | Prüfer |
|---|---|---|
| DEN HAAG | 12-05-1989 | GIRARD Y.A. |